(19) Europäisches Patentamt
European Patent Office
Office européen des brevets

(11) **EP 4 407 522 A1**

(12) **EUROPEAN PATENT APPLICATION**

(43) Date of publication:
**31.07.2024 Bulletin 2024/31**

(21) Application number: **24150680.7**

(22) Date of filing: **08.01.2024**

(51) International Patent Classification (IPC):
***G06N 3/0475*** (2023.01) ***G06N 3/09*** (2023.01)

(52) Cooperative Patent Classification (CPC):
**G06N 3/0475; G06N 3/09**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.01.2023 FI 20235050**

(71) Applicant: **Nokia Solutions and Networks Oy 02610 Espoo (FI)**

(72) Inventors:
• **MONSHIZADEH, Mehrnoosh**
 **91180 Saint Germain les Arpajon (FR)**
• **KHATRI, Vikramajeet**
 **02610 Espoo (FI)**
• **HOJJATINIA, Sina**
 **91300 Massy (FR)**
• **AGGARWAL, Chaitanya**
 **81373 Munich (DE)**
• **SUBRAMANYA, Tejas**
 **81539 Munich (DE)**

(74) Representative: **Nokia EPO representatives Nokia Technologies Oy Karakaari 7 02610 Espoo (FI)**

(54) **PROVIDING BALANCED TRAINING DATA**

(57) Two competing machine learning based models, a first model for generating synthetic data, and a second model for classifying input data to synthetic data and real data, are trained by training the second model until its accuracy meets a preset rule, and then the first model is trained. After training the first model, training of models is repeated until an end criterium is met.

FIG.1

**Description**

TECHNICAL FIELD

Various example embodiments relate to synthetic training data for communication systems.

BACKGROUND

Communication systems are under constant development. It is envisaged that machine learning techniques will be involved in access networks, core networks and operation and maintenance systems. To train machine learning based models targeted, for example, to optimize resources utilization in a network, or a network portion, or to adapt and configure automatically a network to cope with a wide variety of services, or for detecting intrusions, training data is needed. To obtain enough training data, synthetic training data may be generated. However, an imbalanced training data may create a biased trained model.

SUMMARY

The independent claims define the scope, and different embodiments are defined in dependent claims.

According to an aspect there is provided an apparatus comprising means for performing: initializing a first set of trainable parameters for a first machine learning based model outputting synthetic data; and initializing a second set of trainable parameters for a second machine learning based model classifying input data to synthetic data or real data outputting feedback, wherein the first machine learning based model and the second machine learning based model are competing models; determining, whether an end criterium is met; performing a first training process comprising: obtaining real samples; inputting the real samples and synthetic samples output by the first machine learning based model to the second machine learning based model to train the second set of trainable parameters; determining accuracy of the second machine learning based model; applying a preset accuracy rule to determine whether the accuracy of the second machine learning based model meets the accuracy rule; and as long as the end criterium and the accuracy rule are not met, repeating inputting to the second machine learning based model the feedback from the second machine learning based model to retrain the second set of trainable parameters by re-using the samples, determining accuracy and applying the preset accuracy rule; performing, after the first training process, when the accuracy rule is met but the end criterium is not met, a second training process comprising: inputting feedback from the second machine learning based model and random noise to the first machine learning model to train the first set of trainable parameters and to obtain new synthetic samples as output of the first machine learning model; repeating, as long as the end criterium is not met, performing the first training process and the second training process; and storing, after determining that the end criterium is met, at least the first machine learning model trained.

In embodiments, the preset accuracy rule is met at least when the accuracy is above a preset threshold.

In embodiments, the means are further configured to perform maintaining a value of a counter based at least on how many times the first training process and the second training process are performed, and the end criterium is based on a preset limit for the value of the counter.

In embodiments, the means are configured to determine that the end criterium is met when the first training process has meth the accuracy rule for N consecutive times, wherein the N is a positive integer having a value bigger than one.

In embodiments, the means are further configured to determine the accuracy by comparing sample by sample correctness of the classification of the second machine learning model.

In embodiments, the first machine learning based model and the second machine learning based model are based on generative adversarial networks.

In embodiments, the apparatus comprises at least one processor, and at least one memory including computer program code, wherein the at least one processor with the at least one memory and computer program code provide said means.

According to an aspect there is provided a method comprising: initializing a first set of trainable parameters for a first machine learning based model outputting synthetic data; initializing a second set of trainable parameters for a second machine learning based model classifying input data to synthetic data or real data outputting feedback, wherein the first machine learning based model and the second machine learning based model are competing models; determining, whether an end criterium is met; performing a first training process comprising: obtaining real samples; inputting the real samples and synthetic samples output by the first machine learning based model to the second machine learning based model to train the second set of trainable parameters; determining accuracy of the second machine learning based model; applying a preset accuracy rule to determine whether the accuracy of the second machine learning based model meets the accuracy rule; and as long as the end criterium and the accuracy rule are not met, repeating inputting to the second machine learning based model the feedback from the second machine learning based model to retrain the second set of trainable parameters by reusing the samples, determining accuracy and applying the preset accuracy rule; performing, after the first training process, when the accuracy rule is met but the end criterium is not met, a second training process comprising inputting feedback from the second machine learning based model and random noise to the first machine learning model to train the first set of trainable parameters and to obtain new synthetic samples as output of the first machine learning model; repeating, as long as the end criterium is not met, performing the first training process and the second training process; and storing, after determining that the end criterium is met, at least the first machine learning model trained.

In embodiments, the preset accuracy rule is met at least when the accuracy is above a preset threshold.

In embodiments, the means are configured to determine that the end criterium is met when the first training process has meth the accuracy rule for N consecutive times, wherein the N is a positive integer having a value bigger than one.

In embodiments, the method further comprises determining the accuracy by comparing sample by sample correctness of the classification of the second machine learning based model.

According to an aspect there is provided a method comprising: obtaining one or more sets of real data; obtaining one or more sets of synthetic data by inputting noise to a first machine learning model trained using any of the above methods; and training a machine learning based classifier using both the real data and the synthetic data.

According to an aspect there is provided a computer readable medium comprising program instructions stored thereon for at least one of a first functionality or a second functionality, for performing corresponding functionality, wherein the first functionality comprises at least following: initializing a first set of trainable parameters for a first machine learning based model outputting synthetic data; initializing a second set of trainable parameters for a second machine learning based model classifying input data to synthetic data or real data outputting feedback, wherein the first machine learning based model and the second machine learning based model are competing models; determining, whether an end criterium is met; performing a first training process comprising: obtaining real samples; inputting the real samples and synthetic samples output by the first machine learning based model to the second machine learning based model to train the second set of trainable parameters; determining accuracy of the second machine learning based model; applying a preset accuracy rule to determine whether the accuracy of the second machine learning based model meets the accuracy rule; and as long as the end criterium and the accuracy rule are not met, repeating inputting to the second machine learning based model the feedback from the second machine learning based model to retrain the second set of trainable parameters by reusing the samples, determining accuracy and applying the preset accuracy rule; performing, after the first training process, when the accuracy rule is met but the end criterium is not met, a second training process comprising inputting feedback from the second machine learning based model and random noise to the first machine learning model to train the first set of trainable parameters and to obtain new synthetic samples as output of the first machine learning model; repeating, as long as the end criterium is not met, performing the first training process and the second training process; and storing, after determining that the end criterium is met, at least the first machine learning model trained, wherein the second functionality comprises at least following: obtaining one or more sets of real data; obtaining one or more sets of synthetic data by inputting noise to the first machine learning model trained using the first functionality; and training a machine learning based classifier using both the real data and the synthetic data.

In embodiments, the computer readable medium is a non-transitory computer readable medium.

According to an aspect there is provided a computer program comprising instructions, which, when executed by an apparatus, cause the apparatus to perform at least one of a first functionality or a second functionality, wherein the first functionality comprises at least following: initializing a first set of trainable parameters for a first machine learning based model outputting synthetic data; initializing a second set of trainable parameters for a second machine learning based model classifying input data to synthetic data or real data outputting feedback, wherein the first machine learning based model and the second machine learning based model are competing models; determining, whether an end criterium is met; performing a first training process comprising: obtaining real samples; inputting the real samples and synthetic samples output by the first machine learning based model to the second machine learning based model to train the second set of trainable parameters; determining accuracy of the second machine learning based model; applying a preset accuracy rule to determine whether the accuracy of the second machine learning based model meets the accuracy rule; and as long as the end criterium and the accuracy rule are not met, repeating inputting to the second machine learning based model the feedback from the second machine learning based model to retrain the second set of trainable parameters by reusing the samples, determining accuracy and applying the preset accuracy rule; performing, after the first training process, when the accuracy rule is met but the end criterium is not met, a second training process comprising inputting feedback from the second machine learning based model and random noise to the first machine learning model to train the first set of trainable parameters and to obtain new synthetic samples as output of the first machine learning model; repeating, as long as the end criterium is not met, performing the first training process and the second training process; and storing, after determining that the end criterium is met, at least the first machine learning model trained, wherein the second functionality comprises at least following: obtaining one or more sets of real data;

obtaining one or more sets of synthetic data by inputting noise to the first machine learning model trained using the first functionality; and training a machine learning based classifier using both the real data and the synthetic data.

BRIEF DESCRIPTION OF DRAWINGS

Embodiments are described below, by way of example only, with reference to the accompanying drawings, in which

Fig. 1 illustrates an exemplified neural network architecture;
Fig. 2 and Fig. 3 are flow charts illustrating example functionalities;
Fig. 4 and Fig. 5 illustrate histories during training; and
Fig. 6 is a schematic block diagram.

DETAILED DESCRIPTION OF SOME EMBODIMENTS

The following embodiments are only presented as examples. Although the specification may refer to "an", "one", or "some" embodiment(s) and/or example(s) in several locations, this does not necessarily mean that each such reference is to the same embodiment(s) or example(s), or that a particular feature only applies to a single embodiment and/or single example. Single features of different embodiments and/or examples may also be combined to provide other embodiments and/or examples. Furthermore, words "comprising" and "including" should be understood as not limiting the described embodiments to consist of only those features that have been mentioned and such embodiments may contain also features/structures that have not been specifically mentioned. Further, although terms including ordinal numbers, such as "first", "second", etc., may be used for describing various elements, the elements are not restricted by the terms. The terms are used merely for the purpose of distinguishing an element from other elements. For example, a first trainable algorithm could be termed a second trainable algorithm, and similarly, a second trainable algorithm could be also termed a first trainable algorithm without departing from the scope of the present disclosure.

A wide range of data can be collected from communications systems, for example to be used for training different machine learning models for different purposes. However, there are situations in which synthetic data is needed to complement collected data. For example, training data for a classifier may comprise a class with a very few samples, and synthetic data should be generated for the class, to have more balanced training data to train the classifier to generalize well.

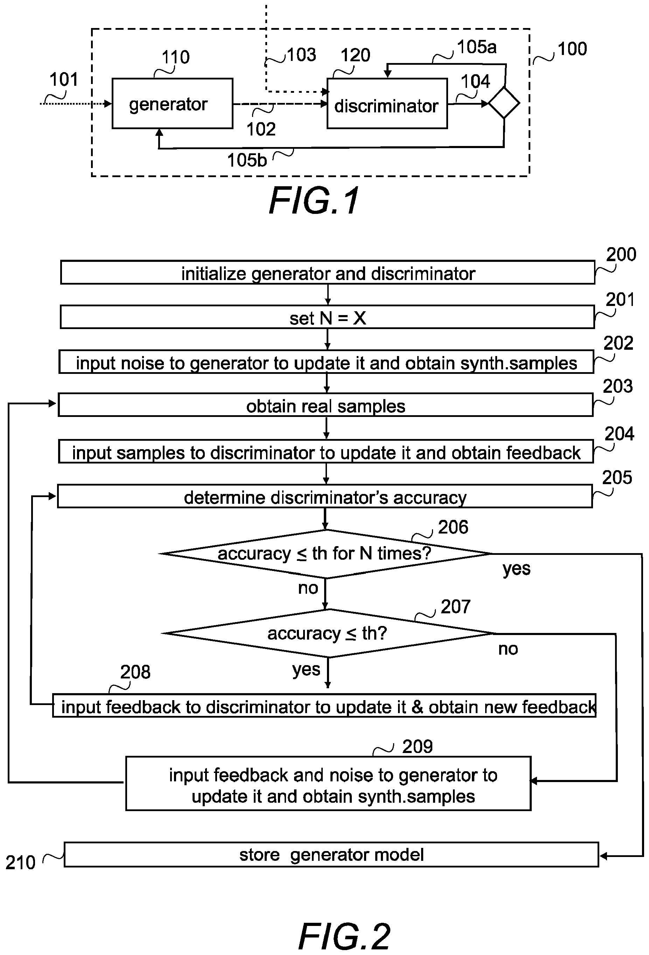

Fig. 1 illustrates a highly simplified basic principles of an architecture 100 that can be used to obtain a synthetic data generator, which can be used to generate synthetic data by taking into account also skewed classes (few samples), for example, as will be described in more detail below.

The architecture 100 comprises two separate trainable networks 110, 120 that compete with each other. One of the trainable networks is called herein a generator 110, and the other one a discriminator 120. The generator 110 produces synthetic samples that tries to resemble a true data distribution (i.e. distribution of real samples), and the discriminator 120 aims to distinguish real samples from the synthetic samples. The generator 110 and the discriminator 120 compete by alternatively trying to best each other, ultimately resulting in the generator 110 converging to the true data distribution, wherein the synthetic samples generated will be very close to real samples, but not duplicates of the real samples. The generator 110 and the discriminator 120 may be based on any neural network architecture compatible with data structure of a model that is to be trained using synthetic data, based on an application or usage of the model. Using multi-layer perceptron as a baseline example, the architecture of the generator 110 , and the architecture of the discriminator 120 may be as follows (relu meaning rectified linear unit):

| Generator Architecture | | | | |
|---|---|---|---|---|
| Layer | Input Shape | Layer Type | Units | Activation Function |
| 1 | (41,) | Input Layer | 41 | - |
| 2 | (256,) | Dense Layer | 256 | relu |
| 3 | (512,) | Dense Layer | 512 | relu |
| 4 | (512,) | Dense Layer | 512 | relu |
| 5 | (1024,) | Dense Layer | 1024 | relu |
| 6 | (512,) | Dense Layer | 512 | relu |
| 7 | (512,) | Dense Layer | 512 | relu |

(continued)

| Generator Architecture | | | | |
|---|---|---|---|---|
| Layer | Input Shape | Layer Type | Units | Activation Function |
| 8 | (256,) | Dense Layer | 256 | relu |
| 9 | (41,) | Dense Layer | 41 | - |

| Discriminator Architecture | | | | |
|---|---|---|---|---|
| Layer | Input Shape | Layer Type | Units | Activation Function |
| 1 | (41,) | Input Layer | 41 | - |
| 2 | (1024,) | Dense Layer | 1024 | relu |
| 3 | (512,) | Dense Layer | 512 | relu |
| 4 | (256,) | Dense Layer | 256 | relu |
| 5 | (128,) | Dense Layer | 128 | relu |
| 6 | (64,) | Dense Layer | 64 | relu |
| 7 | (32,) | Dense Layer | 32 | relu |
| 8 | (16,) | Dense Layer | 16 | relu |
| 9 | (8,) | Dense Layer | 8 | relu |
| 10 | (1,) | Dense Layer | 1 | sigmoid |

It should be appreciated that the above are only examples, and any other architecture may be used as well.

Referring to Fig. 1, a noise 101 is input to the generator 110, which outputs a set of m synthetic samples 102. The noise may be random noise or normal distribution with zero mean and standard deviation of one. The m synthetic samples 102 and m real data samples 103, for example from data obtained by collecting data from a communications network, is input to the discriminator 120. The discriminator is trained with the samples 102, 103, and is configured to determine, by comparing, how well the discriminator could distinguish the synthetic samples and the real data samples. The discriminator 120 outputs 104 a collection of the comparison. If the discriminator did not distinguish the synthetic samples from the real data well enough, a feedback 105a to retrain again is given to the discriminator. Well enough may mean 50 %, or 45 % or 60 % correctness, for example. If the discriminator 120 distinguished the synthetic samples from the real data samples well enough, a feedback 105b is given to the generator 110, which is then trained, using also noise 101 as input, to generate better synthetic samples that can fool the previously trained discriminator. After the generator 110 has been trained, the generator 110 outputs a new set of m synthetic samples 102, triggering retraining of the discriminator 120, as described above. Training cycles may be repeated until the discriminator's accuracy does not improve. It should be appreciated that training of the generator 110 and training of the discriminator 120 do not happen at the same time.

The architecture 100 illustrated in Fig. 1 is based on generative adversarial neural network architecture, which is optimized, by using the feedback 105a, for example, to tackle imbalanced data by learning underlying distribution of minority class samples, and which can generate, taking into account the underlying distribution, synthetic samples, i.e. synthetic data.

Fig. 2 illustrates an example functionality relating to the above disclosed competing and its end criterium. The training described with Fig. 2 may be supervised learning, or semi-supervised learning. In the example, term "noise" is used as a synonym to random noise, or normal distribution with zero mean and standard deviation of one. Further, in the illustrated example an accuracy rule is applied by comparing correctness (accuracy) to a threshold, and the accuracy rule is met, when the correctness (accuracy) is below or equal to a threshold, without limiting the examples to such a solution. It is a straightforward task for one skilled in the art to apply another accuracy rule or rule meeting criterium. For example, the accuracy rule may not be met when the correctness (accuracy) is below the threshold and met when the accuracy is equal to or above the threshold. When the accuracy rule is not met, the discriminator did not distinguish the synthetic samples from the real data well enough.

Referring to Fig. 2, a generator and a discriminator are initialized in block 200. In other words, a first set of trainable parameters for a first machine learning based model outputting synthetic data, i.e. the generator (trainable network for the generator), and a second set of trainable parameters for a second machine learning based model classifying input data to synthetic data and real data, i.e. the discriminator (trainable network for the discriminator), are initialized. Then, in the illustrated example a counter, or a corresponding entity, N counting or tracking the number of consecutive main epochs in which the discriminator's accuracy is not above the threshold is set in block 201 to have a target value X, which is a positive integer bigger than one. For example, X can be 2, 5, 8, 10, 12, or 15. (The counting/tracking is not disclosed in more detail herein. For example, it may be performed as a background operation.) In some examples block 201 may be omitted if a preset target value is used. Then noise is input in block 202 to the to the generator to update the generator and to obtain synthetic samples (a set of synthetic samples, or synthetic data). Updating the generator means that the first set of trainable parameters are trained, i.e. the generator updates its weights. Further, the synthetic samples are obtained as an output of the generator. For example, from the output synthetic data, m synthetic samples may be obtained to be used as an input to the discriminator.

Also real samples, for example m real samples, are obtained in block 203 from real data. The samples, i.e. the synthetic samples and the real samples, are input in block 204 to the discriminator to update the discriminator and to obtain feedback. In other words, inputting in block 204 the samples to the discriminator causes that the discriminator is trained using synthetic data and real data, with aim to learn to separate the synthetic samples from the real samples. More precisely, the second set of trainable parameters are trained, i.e. the discriminator updates its weights, and feedback is obtained as an output of the discriminator. The accuracy of the discriminator is determined in block 205. The accuracy may be a classification accuracy, which may be determined by comparing sample by sample correctness of the classification, to determine the classification accuracy (an overall classification accuracy). The classification accuracy may be an average or mean, expressed in percentage, for example. Then, in the illustrated example, it is determined in block 206, whether the end criterium is met. In the illustrated example, the end criterium is met when the accuracy of the discriminator has been below or equal to a preset threshold (th) for N consecutive times. The preset threshold may be 50 %, for example. If the end criterium is not met (block 206: no), the accuracy, e.g. the classification accuracy, determined in block 205, is compared in block 207 to the preset threshold (th). In the illustrated example, if the classification accuracy is below the threshold (block 207: yes), the feedback is input in block 208 to the discriminator to update it and to obtain new feedback. In other words, inputting in block 207 the feedback to the discriminator causes that the discriminator is trained by re-using at least the synthetic data, with aim to learn to separate the synthetic samples from the real samples. Then the process returns to block 205 to determine the classification accuracy of the discriminator.

In the illustrated example, if the end criterium is not met (block 206: no) but the classification accuracy is not below the threshold (block 207: no), noise and the feedback are input in block 209 to the generator to update the generator and to obtain, as the generator's output, synthetic samples (synthetic data). Updating the generator means that the first set of trainable parameters are trained, i.e. the generator updates its weights. Then in the illustrated example, the process uses synthetic samples output by the generator in block 209 as new synthetic samples for the next main epoch and returns to block 203 to obtain a new set of real samples and then inputs in block 204 the new samples to the discriminator.

In the illustrated example, when the accuracy of the discriminator has been below or equal to a preset threshold (th) for N consecutive times, i.e. the end criterium is met, the training of the generator and the discriminator ends and a model comprising at least the generator is stored in block 210 for a later use, to generate synthetic data for training other models. It should be appreciated that it is also possible to store the discriminator, for example as a separate model, and/or the feedback.

A generator that has been trained according to any of the above disclosed examples and implementations, may be used, for example, when different machine learning based models are trained for wireless communications networks, to generate synthetic data in order to have enough training data. The machine learning based models may be trained, for example, for different tasks in a core network or in operation and maintenance of a network. The generator trained as disclosed above is trained to output a more balanced dataset of synthetic data, including data in one or more skewed classes that contain a very small amount of samples compared to majority classes. For example, in 5G core network and beyond, it is envisaged to have core network functionality to collect key performance indicators and other information about different network domains, to be utilized, for example, for training machine learning algorithms. The training of machine learning algorithms can utilize the information collected for tasks such as mobility prediction and optimization, anomaly detection, cyber security, predictive quality of service and data correlation. The information collected may be used with also synthetic data generated by the generator trained as disclosed above for training the machine learning algorithms, and also for training the generator and the discriminator, as disclosed above.

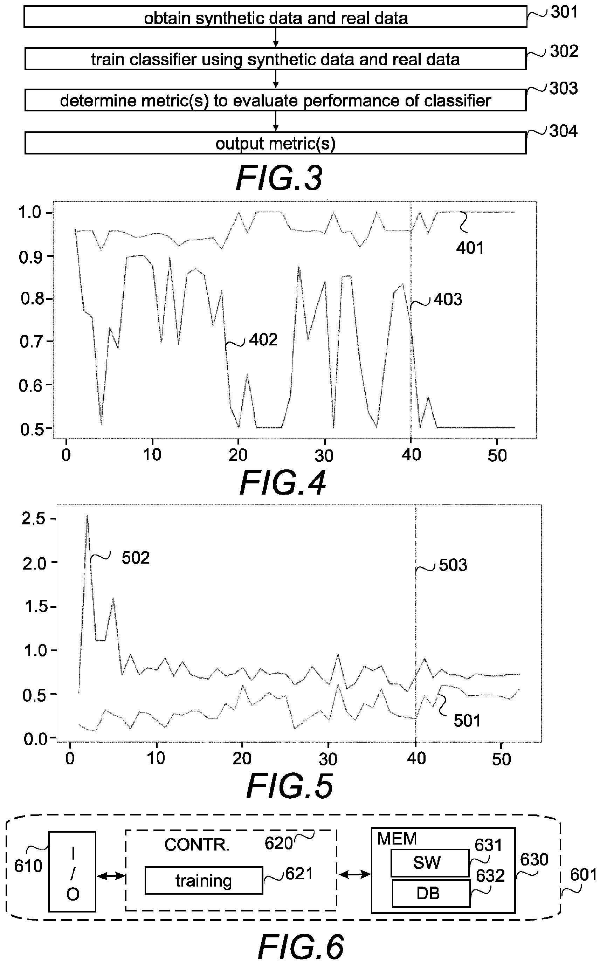

Fig. 3 illustrates an example of training a model that is based on a machine learning model. During the training also synthetic data is used. In the illustrated example the training ends with outputting evaluated performance metrics of the trained model. In the example illustrated the machine learning algorithm that is trained is a network traffic related machine learning algorithm for a classifier, for example classifying packets in a network. For example, the classifier may be a hybrid anomaly detection model. However, it should be appreciated that the principles disclosed can be used also for other machine learning algorithms.

When the above disclosed discriminator architecture and generator architecture are used, a classifier architecture may be, using the multi-layer perceptron as a baseline example, as follows (relu meaning rectified linear unit):

| Classifier Architecture | | | | |
|---|---|---|---|---|
| Layer | Input Shape | Layer Type | Units | Activation Function |
| 1 | (41,) | Input Layer | 41 | - |
| 2 | (2048,) | Dense Layer | 2048 | relu |
| 3 | (1024,) | Dense Layer | 1024 | relu |
| 4 | (512,) | Dense Layer | 512 | relu |
| 5 | (256,) | Dense Layer | 256 | relu |
| 6 | (128,) | Dense Layer | 128 | relu |
| 7 | (64,) | Dense Layer | 64 | relu |
| 8 | (32,) | Dense Layer | 32 | relu |
| 9 | (16,) | Dense Layer | 16 | relu |
| 10 | (7,) | Dense Layer | 7 | softmax |

It should be appreciated that the above is a non-limiting example of a classifier architecture, and other architectures may be used.

Referring to Fig. 3, samples of synthetic data and real data are obtained in block 301. The synthetic data is obtained using a generator trained as disclosed above, using corresponding real samples (real samples obtained from the real data). The classifier is trained in block 302 using the obtained synthetic data and real data, without any changes to the training process. When the training of the classifier ends, in the illustrated examples one or more metrics are determined in block 303 to evaluate a performance of the trained classifier, and the one or more metrics are output in block 304, for example displayed or otherwise shown.

For network traffic related machine learning algorithms, metrics used for image related machine learning algorithms are not usable. Hence, the one or more metrics determined in block 303 may comprise accuracy and/or recall and/or precision and/or F1-score and/or true negative rate and/or false positive rate and/or false negative rate.

In the detailed description of the metrics below, following acronyms are used:

TP = true positive is a positive sample, correctly classified as positive
TN = true negative is a negative sample, correctly classified as negative
FP = false positive is a positive sample, falsely classified as negative
FN = false negative is a negative sample, falsely classified as positive
$i = i^{th}$ class among all classes in multiclass classification

The accuracy (accuracy score) defines a fraction of correct results. The accuracy measures correct predictions in classification problems. The accuracy can be determined using equation (1):

$$Accuracy = \frac{TP + TN}{TP + TN + FP + FN} \quad (1)$$

The recall (recall score) defines a fraction of positive samples that were positively detected as samples of the respected class. The recall measures the ability of the classifier to find correct positive samples of each class in classification problems. The recall can be determined using equation (2):

$$Recall_i = \frac{TP_i}{TP_i + FN_i} \quad (2)$$

The precision (precision score) defines a fraction of positively predicted samples that were actually positive samples of the respected class. The precision measures the ability of the classifier not to falsely classify a sample as positive while it belongs to another class. The precision can be determined using equation (3):

$$Precision_i = \frac{TP_i}{TP_i + FP_i} \qquad (3)$$

The F1-score combines the ability of the classifier both in the recall and the precision to a single metric. The combination is defined as a weighted average, in which both recall and precision have equal weights. The F1-score can be determined using equation 4:

$$F1\ score_i = \frac{2 * Precision_i * Recall_i}{Precision_i + Recall_i} \qquad (4)$$

The true negative rate (TNR) defines the ability of the classifier to negatively detect actual negative samples with respect to each class. The true negative rate can be determined using equation 5:

$$TNR_i = \frac{TN_i}{TN_i + FP_i} \qquad (5)$$

The false positive rate (FPR) defines a fraction of negative samples that were falsely classified as positive with respect to each class. The false positive rate can be determined using equation 6:

$$FPR_i = \frac{FP_i}{FP_i + TN_i} \qquad (6)$$

The false negative rate (FNR) defines a fraction of positive samples that were falsely classified as negative with respect to each class. The false negative rate can be determined using equation 7.

$$FNR_i = \frac{FN_i}{FN_i + TP_i} \qquad (7)$$

The above disclosed classifier architecture, trained using MAWILab 2018 publicly available datasets (real samples), without and with synthetic data (synthetic samples) generated by the generator trained as above disclosed, were evaluated. MAWILab 2018 publicly available datasets are collected from real networks and contain benign and malicious traffic, including diverse attacks. In the evaluation following features were analyzed:

denial of service (DoS)
multipoint to multipoint (mptmp)
multipoint to point (mptp)
point to multipoint (ptmp)
hypertext transfer protocol (HTTP)
network scan (ntsc)

The evaluation of a classifier trained without said synthetic data, meaning that the classifier was trained by imbalance data resulted to following:

| Classifier Performance Analysis (imbalanced) | | | | | | | |
|---|---|---|---|---|---|---|---|
| Classes | Accuracy | Recall | Precision | F1-score | TNR | FPR | FNR |
| Macro-Average | 90.952 | 90.83 | 88.621 | 89.311 | - | - | - |
| DoS | - | 99.998 | 100.0 | 99.999 | 100.0 | 0.0 | 0.002 |
| mptmp | - | 91.014 | 79.627 | 84.941 | 95.491 | 4.509 | 8.986 |

(continued)

| Classifier Performance Analysis (imbalanced) | | | | | | | |
|---|---|---|---|---|---|---|---|
| Classes | Accuracy | Recall | Precision | F1-score | TNR | FPR | FNR |
| mptp | - | 93.487 | 94.934 | 94.205 | 99.034 | 0.966 | 6.513 |
| ptmp | - | 94.065 | 94.197 | 94.131 | 98.878 | 1.122 | 5.935 |
| HTTP | - | 97.474 | 94.288 | 95.854 | 98.856 | 1.144 | 2.526 |
| ntsc | - | 89.933 | 68.863 | 78.0 | 98.889 | 1.111 | 10.067 |
| Normal | - | 69.841 | 88.439 | 78.048 | 78.048 | 1.768 | 30.159 |

The evaluation of a classifier trained with said synthetic data, meaning that the classifier was trained by balanced data, resulted to following:

| Classifier Performance Analysis (balanced) | | | | | | | |
|---|---|---|---|---|---|---|---|
| Classes | Accuracy | Recall | Precision | F1-score | TNR | FPR | FNR |
| Macro-Average | 93.282 | 93.282 | 93.299 | 93.227 | - | - | - |
| Denial of Service | - | 99.999 | 100.0 | 100.0 | 100.0 | 0.0 | 0.001 |
| mptmp | - | 91.742 | 84.166 | 87.791 | 97.123 | 2.877 | 8.258 |
| mptp | - | 95.013 | 95.271 | 95.142 | 99.214 | 0.786 | 4.987 |
| ptmp | - | 94.398 | 94.507 | 94.452 | 99.086 | 0.914 | 5.602 |
| HTTP | - | 96.598 | 96.216 | 96.407 | 99.367 | 0.633 | 3.402 |
| ntsc | - | 97.425 | 95.688 | 96.548 | 99.268 | 0.732 | 2.575 |
| Normal | - | 77.798 | 87.244 | 82.251 | 98.104 | 1.896 | 22.202 |

As can be seen, the classifier trained with the synthetic data (balanced classifier) outperformed the classifier trained without the synthetic data (imbalanced classifier). Hence, the synthetic data generated by the generator trained as disclosed above, provides a balanced distribution for unknown packets and rare attack packets, thereby providing a better generalization rate.

To facilitate the comparison, following tables compare directly metrics relating to classifying transmission control protocol (TCP) packets, i.e. Macro-Average, and ntsc attacks. As can be seen, introducing with the synthetic data generated by the generator trained as disclosed above, increased F-1 score for ntsc attacks by 18.548 % and the overall accuracy by 3 %.

| Model Overall Performance Comparison (Macro-Average) | | | | | | | |
|---|---|---|---|---|---|---|---|
| | Accuracy | Recall | Precision | F1-score | TNR | FPR | FNR |
| imbalanced | 90.952 | 90.83 | 88.621 | 89.311 | - | - | - |
| balanced | 93.282 | 93.282 | 93.299 | 93.227 | - | - | - |

| Model Classification Performance Comparison on ntsc Attacks | | | | | | | |
|---|---|---|---|---|---|---|---|
| | Accuracy | Recall | Precision | F1-score | TNR | FPR | FNR |
| imbalanced | - | 89.933 | 68.863 | 78.0 | 98.889 | 1.111 | 10.067 |
| balanced | - | 97.425 | 95.688 | 96.548 | 99.268 | 0.732 | 2.575 |

Hence, the above disclosed ways to train the generator and the discriminator provide a generator that generates synthetic data for training other models, said synthetic data generalizing well and maintaining balance even with skewed classes (minority classes). Hence, it overcomes challenges that are in other techniques that try to balance training data. For example, downsampling the majority class in the training data to overcome imbalanced datasets by making the distribution of all classes equal, omits a significant part of training data and results in preventing the other models to learn the approximate underlying distribution of samples of the majority class. The other models trained using such training data cannot generalize well. Oversampling skewed classes (minority classes) repeatedly slows down the training procedure and does not improve the generalization rate either. Sample weighting technique, in which weights are assigned inversely proportional to each class frequency, during training, does not improve generalization rate of the downsampling or oversampling significantly.

Fig. 4 illustrates accuracy history and Fig. 5 loss history over the number of main epochs during above described training the discriminator and the generator, for example as described with Fig. 1. In the training, the trained using MAWILab 2018 publicly available datasets were used to obtain real samples.

In Fig. 4, the y-axis is the accuracy, the x-axis is the number of main epochs, line 401 depicts loss of the discriminator, and line 402 loss of the generator. For the end criterium of the example in Fig. 2, one can see that setting the value X to be 5 or 10, for example, provides a limit after which further training will not increase the accuracy and will not make the generator better. Using Fig. 4, the example in Fig. 2 could be amended so that determining whether the end criterium is met could be started after 40 (depicted by line 403) main epochs have been performed.

In Fig. 5, the y-axis is the loss, the x-axis is the number of main epochs, line 501 depicts accuracy of the discriminator, line 502 accuracy of the generator and line 503 shows 40 main epochs.

The blocks, related functions, and inputs described above by means of Fig. 1 to Fig. 3 are in no absolute chronological order, and some of them may be performed simultaneously or in an order differing from the given one. Other functions can also be executed between them or within them, and other inputs may be used, and/or other rules, including end criterium, applied. Some of the blocks or part of the blocks or one or more pieces of inputs can also be left out or replaced by a corresponding block or part of the block or one or more pieces of inputs. For example, training a model using synthetic data may be performed without blocks 303 and 304.

Fig. 6 illustrates an apparatus 601 according to some embodiments.

The apparatus 601 may comprise one or more control circuitries 620, such as at least one processor, and at least one memory 630, including one or more algorithms 631, such as a computer program code (software) wherein the at least one memory and the computer program code (software) are configured, with the at least one processor, to cause the apparatus to carry out any one of the exemplified functionalities of the apparatus described above. Said at least one memory 630 may also comprise at least one database 632.

According to an embodiment, there is provided an apparatus comprising at least one processor; and at least one memory including a computer program code, wherein the at least one memory and the computer program code are configured, with the at least one processor, to cause the apparatus to perform at least: initializing a first set of trainable parameters for a first machine learning based model outputting synthetic data; and initializing a second set of trainable parameters for a second machine learning based model classifying input data to synthetic data or real data outputting feedback, wherein the first machine learning based model and the second machine learning based model are competing models; determining, whether an end criterium is met; performing a first training process comprising: obtaining real samples; inputting the real samples and synthetic samples output by the first machine learning based model to the second machine learning based model to train the second set of trainable parameters; determining accuracy of the second machine learning based model; applying a preset accuracy rule to determine whether the accuracy of the second machine learning based model meets the accuracy rule; and as long as the end criterium and the accuracy rule are not met, repeating inputting to the second machine learning based model the feedback from the second machine learning based model to retrain the second set of trainable parameters by re-using the samples, determining accuracy and applying the preset accuracy rule; performing, after the first training process, when the accuracy rule is met but the end criterium is not met, a second training process comprising: inputting feedback from the second machine learning based model and random noise to the first machine learning model to train the first set of trainable parameters and to obtain new synthetic samples as output of the first machine learning model; repeating, as long as the end criterium is not met, performing the first training process and the second training process; and storing, after determining that the end criterium is met, at least the first machine learning model trained.

Referring to Fig. 6, the one or more control circuitries 620 of the apparatus 601 comprise at least a training circuitry 621 which is configured to perform training according to embodiments and examples disclosed. To this end, the training circuitry 621 of the apparatus 601 is configured to carry out at least some of the functionalities of the apparatus described above, e.g., by means of Fig. 1 to Fig. 3, using one or more individual circuitries.

Referring to Fig. 6, the memory 630 may be implemented using any suitable data storage technology, such as semiconductor based memory devices, flash memory, magnetic memory devices and systems, optical memory devices and systems, fixed memory and removable memory.

Referring to Fig. 6, the apparatus 601 may further comprise different input/output (I/O) interfaces 610 such as one or more communication interfaces comprising hardware and/or software for realizing communication connectivity according to one or more communication protocols. The one or more interfaces 610 may enable connecting to the Internet and/or to a core network of a wireless communications network. The one or more interfaces 610 may provide the apparatus with communication capabilities to communicate in a cellular communication system and enable communication to different network nodes or elements. The one or more interfaces 610 may comprise standard well-known components such as an amplifier, filter, frequency-converter, (de)modulator, and encoder/decoder circuitries, controlled by the corresponding controlling units, and possibly one or more antennas.

In an embodiment, at least some of the functionalities of the apparatus of Fig. 6 may be shared between two physically separate devices, forming one operational entity. Therefore, the apparatus may be seen to depict the operational entity comprising one or more physically separate devices for executing at least some of the described processes.

As used in this application, the term 'circuitry' may refer to one or more or all of the following: (a) hardware-only circuit implementations, such as implementations in only analog and/or digital circuitry, and (b) combinations of hardware circuits and software (and/or firmware), such as (as applicable): (i) a combination of analog and/or digital hardware circuit(s) with software/firmware and (ii) any portions of hardware processor(s) with software, including digital signal processor(s), software, and memory(ies) that work together to cause an apparatus, such as a network node (network device) in a core network or a network node (network device) in operation, administration and maintenance or a terminal device or an access node, to perform various functions, and (c) hardware circuit(s) and processor(s), such as a microprocessor(s) or a portion of a microprocessor(s), that requires software (e.g. firmware) for operation, but the software may not be present when it is not needed for operation. This definition of 'circuitry' applies to all uses of this term in this application, including any claims. As a further example, as used in this application, the term 'circuitry' also covers an implementation of merely a hardware circuit or processor (or multiple processors) or a portion of a hardware circuit or processor and its (or their) accompanying software and/or firmware. The term 'circuitry' also covers, for example and if applicable to the particular implementation, a baseband integrated circuit for an access node or a terminal device or other computing or network device.

In an embodiment, at least some of the processes described in connection with Fig. 1 to Fig. 3 may be carried out by an apparatus comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, antenna, antenna circuitry, and circuitry. In an embodiment, the at least one processor, the memory, and the computer program code form processing means or comprises one or more computer program code portions for carrying out one or more operations according to any one of the examples of Fig. 1 to Fig. 3 or operations thereof.

Embodiments and examples as described may also be carried out in the form of a computer process defined by a computer program or portions thereof. Embodiments of the methods described in connection with Fig. 1 to Fig. 3 may be carried out by executing at least one portion of a computer program comprising corresponding instructions. The computer program may be provided as a computer readable medium comprising program instructions stored thereon or as a non-transitory computer readable medium comprising program instructions stored thereon. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. The term "non-transitory," as used herein, is a limitation of the medium itself (i.e., tangible, not a signal ) as opposed to a limitation on data storage persistency (e.g., RAM vs. ROM). Coding of software for carrying out the embodiments as shown and described is well within the scope of a person of ordinary skill in the art.

Even though the embodiments have been described above with reference to examples according to the accompanying drawings, it is clear that the embodiments are not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1.  An apparatus comprising means for performing:

    initializing a first set of trainable parameters for a first machine learning based model outputting synthetic data;

and

initializing a second set of trainable parameters for a second machine learning based model classifying input data to synthetic data or real data outputting feedback, wherein the first machine learning based model and the second machine learning based model are competing models;

determining, whether an end criterium is met;

performing a first training process comprising:

obtaining real samples;

inputting the real samples and synthetic samples output by the first machine learning based model to the second machine learning based model to train the second set of trainable parameters;

determining accuracy of the second machine learning based model;

applying a preset accuracy rule to determine whether the accuracy of the second machine learning based model meets the accuracy rule; and

as long as the end criterium and the accuracy rule are not met, repeating inputting to the second machine learning based model the feedback from the second machine learning based model to retrain the second set of trainable parameters by re-using the samples, determining accuracy and applying the preset accuracy rule;

performing, after the first training process, when the accuracy rule is met but the end criterium is not met, a second training process comprising:

inputting feedback from the second machine learning based model and random noise to the first machine learning model to train the first set of trainable parameters and to obtain new synthetic samples as output of the first machine learning model;

repeating, as long as the end criterium is not met, performing the first training process and the second training process; and

storing, after determining that the end criterium is met, at least the first machine learning model trained.

2. The apparatus of claim 1, wherein the preset accuracy rule is met at least when the accuracy is above a preset threshold.

3. The apparatus of claim 1, wherein the means are further configured to perform maintaining a value of a counter based at least on how many times the first training process and the second training process are performed, and the end criterium is based on a preset limit for the value of the counter.

4. The apparatus of claim 1, wherein the means are configured to determine that the end criterium is met when the first training process has meth the accuracy rule for N consecutive times, wherein the N is a positive integer having a value bigger than one.

5. The apparatus of claim 1, wherein the means are further configured to determine the accuracy by comparing sample by sample correctness of the classification of the second machine learning model.

6. The apparatus of claim 1, wherein the first machine learning based model and the second machine learning based model are based on generative adversarial networks.

7. The apparatus of claim 1, the apparatus comprising at least one processor, and at least one memory including computer program code, wherein the at least one processor with the at least one memory and computer program code provide said means.

8. A method comprising:

initializing a first set of trainable parameters for a first machine learning based model outputting synthetic data;

initializing a second set of trainable parameters for a second machine learning based model classifying input data to synthetic data or real data outputting feedback, wherein the first machine learning based model and the second machine learning based model are competing models;

determining, whether an end criterium is met;

performing a first training process comprising:

obtaining real samples;

inputting the real samples and synthetic samples output by the first machine learning based model to the second machine learning based model to train the second set of trainable parameters;

determining accuracy of the second machine learning based model;

applying a preset accuracy rule to determine whether the accuracy of the second machine learning based model meets the accuracy rule; and

as long as the end criterium and the accuracy rule are not met, repeating inputting to the second machine learning based model the feedback from the second machine learning based model to retrain the second set of trainable parameters by re-using the samples, determining accuracy and applying the preset accuracy rule;

performing, after the first training process, when the accuracy rule is met but the end criterium is not met, a second training process comprising inputting feedback from the second machine learning based model and random noise to the first machine learning model to train the first set of trainable parameters and to obtain new synthetic samples as output of the first machine learning model;

repeating, as long as the end criterium is not met, performing the first training process and the second training process; and

storing, after determining that the end criterium is met, at least the first machine learning model trained.

9. The method of claim 8, wherein the preset accuracy rule is met at least when the accuracy is above a preset threshold.

10. The method of claim 8, wherein the means are configured to determine that the end criterium is met when the first training process has meth the accuracy rule for N consecutive times, wherein the N is a positive integer having a value bigger than one.

11. The method of claim 8, further comprising determining the accuracy by comparing sample by sample correctness of the classification of the second machine learning based model.

12. A computer readable medium comprising program instructions stored thereon for at least one of a first functionality or a second functionality, for performing corresponding functionality,

wherein the first functionality comprises at least following:

initializing a first set of trainable parameters for a first machine learning based model outputting synthetic data;

initializing a second set of trainable parameters for a second machine learning based model classifying input data to synthetic data or real data outputting feedback, wherein the first machine learning based model and the second machine learning based model are competing models;

determining, whether an end criterium is met;

performing a first training process comprising:

obtaining real samples;

inputting the real samples and synthetic samples output by the first machine learning based model to the second machine learning based model to train the second set of trainable parameters;

determining accuracy of the second machine learning based model;

applying a preset accuracy rule to determine whether the accuracy of the second machine learning based model meets the accuracy rule; and

as long as the end criterium and the accuracy rule are not met, repeating inputting to the second machine learning based model the feedback from the second machine learning based model to retrain the second set of trainable parameters by re-using the samples, determining accuracy and applying the preset accuracy rule;

performing, after the first training process, when the accuracy rule is met but the end criterium is not met, a second training process comprising inputting feedback from the second machine learning based model and random noise to the first machine learning model to train the first set of trainable parameters and to obtain new synthetic samples as output of the first machine learning model;

repeating, as long as the end criterium is not met, performing the first training process and the second training process; and

storing, after determining that the end criterium is met, at least the first machine learning model trained,

wherein the second functionality comprises at least following:

obtaining one or more sets of real data;

obtaining one or more sets of synthetic data by inputting noise to the first machine learning model trained using the first functionality; and

training a machine learning based classifier using both the real data and the synthetic data.

13. The computer readable medium according of claim 12, wherein the computer readable medium is a non-transitory computer readable medium.

14. A computer program comprising instructions, which, when executed by an apparatus, cause the apparatus to perform at least one of a first functionality or a second functionality,

wherein the first functionality comprises at least following:

initializing a first set of trainable parameters for a first machine learning based model outputting synthetic data;

initializing a second set of trainable parameters for a second machine learning based model classifying input data to synthetic data or real data outputting feedback, wherein the first machine learning based model and the second machine learning based model are competing models;

determining, whether an end criterium is met;

performing a first training process comprising:

obtaining real samples;

inputting the real samples and synthetic samples output by the first machine learning based model to the second machine learning based model to train the second set of trainable parameters;

determining accuracy of the second machine learning based model;

applying a preset accuracy rule to determine whether the accuracy of the second machine learning based model meets the accuracy rule; and

as long as the end criterium and the accuracy rule are not met, repeating inputting to the second machine learning based model the feedback from the second machine learning based model to retrain the second set of trainable parameters by re-using the samples, determining accuracy and applying the preset accuracy rule;

performing, after the first training process, when the accuracy rule is met but the end criterium is not met, a second training process comprising inputting feedback from the second machine learning based model and random noise to the first machine learning model to train the first set of trainable parameters and to obtain new synthetic samples as output of the first machine learning model;

repeating, as long as the end criterium is not met, performing the first training process and the second training process; and

storing, after determining that the end criterium is met, at least the first machine learning model trained,

wherein the second functionality comprises at least following:

obtaining one or more sets of real data;

obtaining one or more sets of synthetic data by inputting noise to the first machine learning model trained using the first functionality; and

training a machine learning based classifier using both the real data and the synthetic data.

*FIG.1*

*FIG.2*

| obtain synthetic data and real data | ~301 |

| train classifier using synthetic data and real data | ~302 |

| determine metric(s) to evaluate performance of classifier | ~303 |

| output metric(s) | ~304 |

*FIG.3*

*FIG.4*

*FIG.5*

*FIG.6*

| | Europäisches Patentamt<br>European Patent Office<br>Office européen des brevets | **EUROPEAN SEARCH REPORT** | **Application Number**<br>EP 24 15 0680 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DUY PHAN THE ET AL: "DIGFuPAS: Deceive IDS with GAN and function-preserving on adversarial samples in SDN-enabled networks",<br>COMPUTERS & SECURITY, ELSEVIER SCIENCE PUBLISHERS. AMSTERDAM, NL,<br>vol. 109, 12 June 2021 (2021-06-12),<br>XP086744867,<br>ISSN: 0167-4048, DOI:<br>10.1016/J.COSE.2021.102367<br>[retrieved on 2021-06-12]<br>* abstract; figures 2,3 *<br>* Sections 2.3, 4.3<br>Algorithm 1 *<br>- - - - - | 1-14 | INV.<br>G06N3/0475<br>G06N3/09 |
| X | WANG JIANYU ET AL: "Def-IDS: An Ensemble Defense Mechanism Against Adversarial Attacks for Deep Learning-based Network Intrusion Detection",<br>2021 INTERNATIONAL CONFERENCE ON COMPUTER COMMUNICATIONS AND NETWORKS (ICCCN), IEEE,<br>19 July 2021 (2021-07-19), pages 1-9,<br>XP033966161,<br>DOI: 10.1109/ICCCN52240.2021.9522215<br>[retrieved on 2021-08-25]<br>* abstract; figures 2-5 *<br>* Section IV *<br>* Section IV<br>Algorithm 1 *<br>- - - - - | 1-14 | |

| | TECHNICAL FIELDS SEARCHED (IPC) |
|---|---|
| | G06N |

The present search report has been drawn up for all claims

| Place of search | Date of completion of the search | Examiner |
|---|---|---|
| The Hague | 19 June 2024 | Houtgast, Ernst |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
......................................................................................
& : member of the same patent family, corresponding document

EPO FORM 1503 03.82 (P04C01)